# EUROPEAN PATENT APPLICATION

(11) **EP 4 840 650 A1**
(43) Date of publication of application: **18.11.2026**
(21) Application number: 25305711.1
(22) Date of filing: 16.05.2025
(51) Int. Cl.: B43K 8/22, B43K 29/08, G06F 3/0354

(54) **INK SYSTEM CONFIGURATION FOR DIGITAL MARKER**

(71) Applicant: Société BIC, 92110 Clichy (FR); Advanced Magnetic Interaction, AMI, 38170 Seyssinet-Pariset (FR)
(72) Inventor: Lintermy, Julien, 92110 Clichy (FR); Vallejo, Jean-Luc, 38170 Seyssinet-Pariset (FR); Jobert, Timothee, 38170 Seyssinet-Pariset (FR)
(74) Representative: BIC

(57) **Abstract**

A writing instrument (100) comprises a writing instrument body (110) comprising a body longitudinal axis (x) and a writing orifice (120) at a distal end (111) of the body (110). The writing instrument further comprises a reservoir (140) for storing a writing ink arranged proximally to the writing orifice (120), a nib (150) arranged distally to the reservoir (140) and in fluid communication with the reservoir (140), wherein the nib (150) extends substantially along the body longitudinal axis (x) and comprises a distal end portion (151) protruding through the writing orifice (120), and a magnetic unit (160) arranged in the body (110) between the reservoir (140) and the distal end portion (151) of the nib (150).

## Description

### TECHNICAL FIELD

The present disclosure relates to the technical field of determining and/or tracking a location of magnetic objects and/or passive accessories, and more specifically to a writing instrument, to a system for determining and/or tracking a location of a writing instrument, to a method of assembling a writing instrument and to a method for identifying a writing instrument.

### BACKGROUND

In the technical field of location determination and/or tracking of a magnetic object, the provision of one or more magnetometers allows to measure a magnetic field associated with the magnetic object. The magnetometer measurements enable determining and/or tracking of the location of the magnetic object within a sensing volume created by the plurality of magnetometers. The location may include a position and/or orientation of the magnetic object. In some cases, at least one magnetic object may be arranged in or coupled to a user-borne device, i.e., a device held or worn by a user. Some user-borne devices using this technology may be electronically and/or electrically passive. More specifically, electrically passive means that the user-borne device may not comprise a power source (e.g., batteries) and/or means to receive power (e.g., wireless power transmission via an inductive coil) for powering an electronic feature of the user-borne device. Electronically passive means that no computation or processing occurs (or happens) on the user-borne device.

In some applications, a magnetic unit (which may also be referred to as a magnetic object or which may comprise at least one magnetic object) may be coupled to a writing instrument which may be operated by a user on a writing support surface on a writing support during a user operation. Based on the magnetic field measurements associated with the magnetic unit, the location of the writing instrument may be determined and/or tracked, e.g., relative to the writing support and/or writing support surface. Typical writing instruments may comprise ink systems which are adapted to dispense volatile inks, such as felt tip markers, highlighters, non-permanent and permanent markers, and the like. Commonly, felt pens comprise a writing tip in the form of a nib and a cap to close off the nib. The nib is typically kept wet by the ink used for writing. The space in a writing instrument comprising an ink system (e.g., including a reservoir for writing ink and a nib in fluid communication with the reservoir) is limited so that it is difficult to include components in addition to the ink system in the writing instrument while ensuring the function of the ink system. In the field of location determination and/or tracking of magnetic objects, magnetic rings are known which are coupled to an outer circumference of a writing instrument, e.g., which may be in the form of a stylus. However, magnetic rings and/or estimation models suitable for determining and/or tracking an associated location relative to the writing instrument and writing support can be complex and costly. For example, such systems often require a pressure sensing matrix and/or calibration to determine the location of the writing instrument, more specifically of the nib and its contact point or surface, relative to the writing support. Furthermore, coupling a magnetic ring to the writing instrument at an unknown position (e.g., at an unknown, undetermined or random axial position along the writing instrument that is chosen by a user based on user preferences) on the outer circumference of the writing instrument may lead to inaccurate tracking as the distance to the writing support is not exactly known, as well as less ergonomic because it may disturb the user during a writing operation.

Thus, the object of the present disclosure is to provide a writing instrument, more specifically with an ink system, with an improved integration of a magnetic unit and which allows for improved location determination and/or tracking of the writing instrument with a plurality of magnetometers.

### SUMMARY

The present disclosure relates to a writing instrument as defined in claim 1, a system for determining and/or tracking a location of a writing instrument as defined in claim 13, a method of assembling a writing instrument as defined in claim 14 and to a method for identifying a writing instrument. The dependent claims depict preferred embodiments of the writing instrument and the method.

According to a first aspect of the present disclosure, a writing instrument includes a writing instrument body comprising a body longitudinal axis and a writing orifice at a distal end of the body. The writing instrument comprises a reservoir for storing a writing ink arranged proximally to the writing orifice and a nib arranged distally to the reservoir and in fluid communication with the reservoir. The nib extends along the body longitudinal axis and comprises a distal end portion protruding through the writing orifice. The writing instrument comprises a magnetic unit arranged in the body between the reservoir and the distal end portion of the nib.

The writing instrument according to the first aspect of the present disclosure may allow for location determination and tracking of the magnetic unit in the writing instrument in at least five degrees of freedom with increased and/or improved accuracy while providing effective ink flow to the nib, more specifically compared to a magnetic ring which is attached to an outer circumference of a writing instrument at an unknown, undetermined or random position. Due to the arrangement of the magnetic unit between the reservoir and the distal end portion of the nib, the magnetic unit may be located close to the nib, thereby increasing accuracy during location determination and/or tracking of the writing instrument during a writing operation. Increased accuracy can be provided during the lifetime of the writing instrument. Furthermore, the magnetic unit may be removably coupled with the body so that the magnetic unit may be easily salvaged from the writing instrument, e.g., when the writing instrument or parts of the writing instrument like the nib are worn. In addition, since the magnetic unit is arranged in the writing instrument, ergonomics can be improved during use of the writing instrument in comparison to magnetic rings attached to an outer circumference of the writing instrument. In addition, the magnetic unit may be coupled to the body so that relative movement is prevented, wherein a defined location of the magnetic unit relative to the writing instrument, more specifically the nib, is ensured.

According to a second aspect of the present disclosure, a system for determining and/or tracking a location of a writing instrument comprises the writing instrument according to the first aspect of the present disclosure and a plurality of magnetometers configured to create a sensing volume and configured to measure a magnetic field associated with the magnetic unit. The system is configured to track movement and/or location of the writing instrument in at least five degrees of freedom based on the magnetic field measurements. The above features, embodiments and advantageous technical effects may also apply to the system.

According to a third aspect of the present disclosure, a method of assembling a writing instrument comprises providing a writing instrument body comprising a body longitudinal axis and a writing orifice at a distal end of the body, and providing a reservoir for storing a writing ink, a nib and a magnetic unit. The method further comprises coupling the nib, the reservoir and the magnetic unit with each other and to the body such that the nib is arranged distally to the reservoir and in fluid communication with the reservoir, the magnetic unit is arranged between the reservoir and a distal end portion of the nib, the reservoir is arranged proximally to the writing orifice, the nib extends substantially along the body longitudinal axis, the distal end portion protrudes through the writing orifice and the magnetic unit is arranged in the body. The above features, embodiments and advantageous technical effects may also apply to the method.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: is a schematic view of a system for determining and/or tracking a location of a writing instrument according to aspects of the present disclosure;
- **Fig. 2**: is a schematic view of the writing instrument;
- **Figs. 3A and 3B**: are cross-sections of the writing instrument according to a first embodiment;
- **Figs. 4A and 4B**: are cross-sections of the writing instrument shown in Fig. 2 according to a second embodiment;
- **Figs. 5A and 5B**: are a top view and a cross-section of the coupling component according to aspects of the present disclosure;
- **Figs. 6A to 6D**: are schematic views of the magnetic unit according to aspects of the present disclosure;
- **Fig. 7**: is a schematic view of a process flow diagram of a method for identifying a writing instrument according to an aspect of the present disclosure.

### DETAILED DESCRIPTION

Embodiments of the writing instrument, the system for determining and/or tracking a location of a writing instrument, the method of assembling the writing instrument and the method for identifying a writing instrument according to aspects of the present disclosure will be described with reference to the drawings as follows.

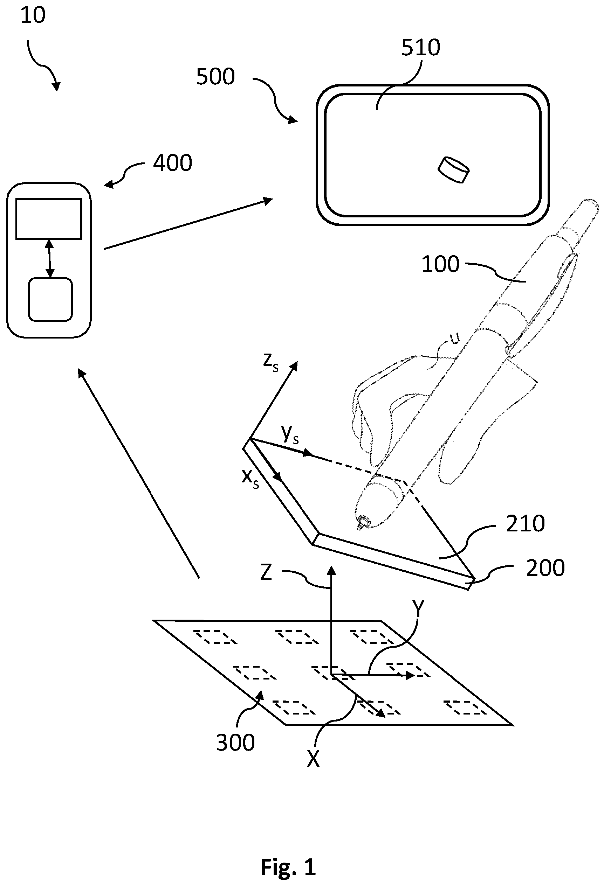

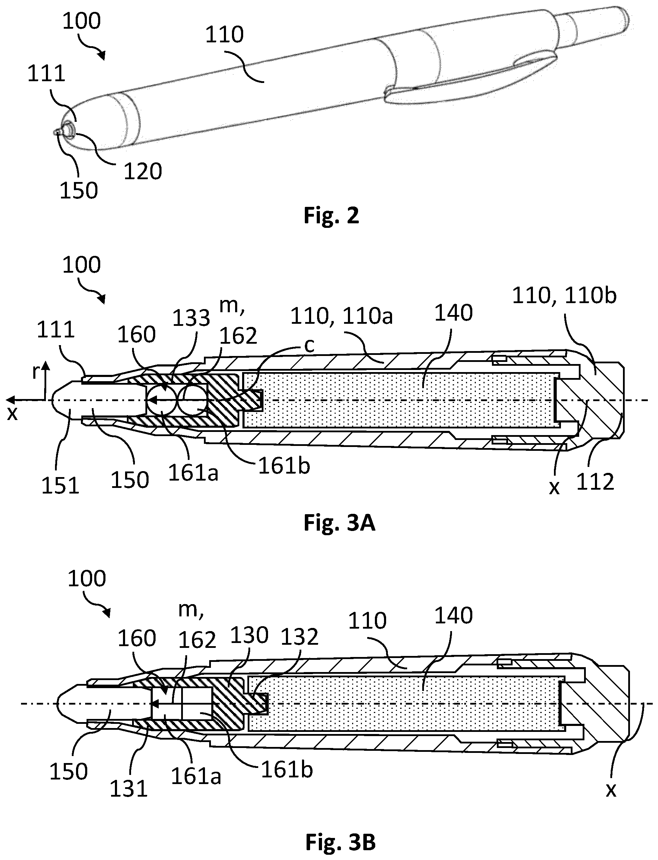

Fig. 1 is a schematic view of a system 10 for determining and/or tracking a location of a writing instrument 100 according to aspects of the present disclosure. In other words, the system 10 may be adapted for determining a manipulation of the writing instrument 100 by a user during a writing operation. Fig. 2 is a schematic view of the writing instrument 100 and Figs. 3A to 4B are cross-sections of the writing instrument 100 shown in Fig. 2 according to embodiments of the present disclosure. Referring to Figs. 3A to 4B, the writing instrument 100 comprises a writing instrument body (in the following "body") comprising a body longitudinal axis x and a writing orifice 120 at a distal end 111 of the body 110. The writing instrument 100 may also comprise a radial direction r. As shown in the Figs., the radial direction r may extend perpendicular to the body longitudinal axis x. The writing instrument 100 comprises a reservoir 140 for storing a writing ink arranged proximally to the writing orifice 120 and a nib 150 arranged distally to the reservoir 140 and in fluid communication with the reservoir 140. The nib 150 extends substantially along the body longitudinal axis x and comprises a distal end portion 151 protruding through the writing orifice 120. The writing instrument 100 comprises a magnetic unit 160 arranged in the body 110 between the reservoir 140 and the distal end portion 151 of the nib 150. The writing instrument 100 according to the aspects of the present disclosure may allow for location determination and/or tracking of the magnetic unit 160 in the writing instrument 100 in at least five degrees of freedom with increased and/or improved accuracy while providing effective ink flow to the nib 150, more specifically compared to a magnetic ring which is attached to an outer circumference of a writing instrument at a random position. More specifically, although space is limited in a writing instrument that comprises an ink system, the configuration of the writing instrument 100 and magnetic unit 160 according to the present disclosure may allow for improved location determination and/or tracking of the writing instrument 100 while providing effective ink flow and improved ergonomics.

During a writing operation, the writing instrument 100 is operated on a writing surface (e.g., a sheet of paper, a whiteboard surface, a blackboard surface, a glass surface, and/or a dry erase compatible film) on a writing support surface 210 of a writing support 200. A contact is created between the nib 150 and the writing surface (and/or the writing support surface 210). Determining and/or tracking the location of the writing instrument 100 is based on magnetic field measurements of the magnetic unit 160 with magnetometers 300 (this is described in detail below). Since the location (including position and/or orientation) of the magnetic unit 160 relative to the writing instrument 100 is known and may include, e.g., a fixed distance and/or orientation of the magnetic unit 160 relative to the nib 150, more specifically relative to a contact point or surface of the nib 150 with the writing surface (the contact point or surface of the nib 150 are described in detail below), the location of the writing instrument relative to the writing support 200, writing support surface 210 and/or writing surface can be determined based on the magnetic field measurements - without the provision of additional sensors such as a pressure sensor of the writing support. During the writing operation, the writing instrument 100 is tilted relative to the writing surface (and/or writing support surface 210). The greater the distance between the magnetic unit 160 coupled to the writing instrument 100 and the nib 150, the less accurate the determination (or estimation) of the contact point or surface of the nib 150 on the writing surface based on the magnetic field measurements. Due to the arrangement of the magnetic unit 160 between the reservoir 140 and the distal end portion 151 of the nib 150, the magnetic unit 160 may be located close to the nib 150, thereby increasing accuracy during location determination and/or tracking of the writing instrument 100. Increased accuracy can be provided during the lifetime of the writing instrument 100. In addition, since the magnetic unit 160 is arranged in the writing instrument 100, ergonomics can be improved during use of the writing instrument 100 in comparison to magnetic rings known in the art and attached to an outer circumference of the writing instrument 100. Furthermore, the magnetic unit 160 may be coupled to the body 110 so that relative movement is prevented, wherein a defined location of the magnetic unit 160 relative to the writing instrument 100, more specifically the nib 150, is ensured.

The magnetic unit 160 and/or the nib 150 may be removably coupled to the body 110. The magnetic unit 160 may be easily salvaged from the writing instrument 100, e.g., when the writing instrument 100 or parts of the writing instrument 100 like the nib 150 are worn. The nib 150 may be easily replaced in the writing instrument 100 when worn. Furthermore, costs of the writing instrument 100 can be reduced, e.g., since the magnetic unit 160 and/or the nib 150 may be removably coupled to the body 110. As an example, when the writing instrument 100 is worn, a user may salvage the magnetic unit 160 from the writing instrument 100 and get a new writing instrument 100, which may be sold without the magnetic unit 160 at a lower price. The user may couple the magnetic unit 160 to the new writing instrument 100 for use. The same applies to a replacement of the nib 150.

The writing instrument 100 may be electrically and/or electronically passive. Electrically passive means that the writing instrument 100 may not comprise a power source (e.g., batteries) and/or means to receive power (e.g., wireless power transmission via an inductive coil) for powering a feature (e.g., an electronic feature) of the writing instrument 100. Electronically passive means that no computation or processing occurs (or happens) on the writing instrument 100. However, in some embodiments, the writing instrument 100 may still comprise electronic features such as light emitters, and/or buttons.

Referring to Fig. 1, the system 10 comprises the writing instrument 100 according to the aspects and/or embodiments described herein, and a plurality of magnetometers 300 (i.e., at least two magnetometers). The plurality of magnetometers 300 is configured to create a sensing volume and to measure a magnetic field associated with, or generated by, the magnetic unit 160 (as well as of any additional magnetic units that may be provided). The system 10 is configured to track movement and/or location of the writing instrument 100 in at least five degrees of freedom based on the magnetic field measurements. In some embodiments, the system 10 may comprise at least one processing unit 400 configured to control a representation of the writing instrument 100 on at least one output device 500 of the system 10, which may comprise a display 510 or screen. In embodiments, the system 10 may comprise the writing instrument 100 and a digital device, e.g., an electronic interactive display, like a tablet computer. The digital device may comprise the plurality of magnetometers 300. The plurality of magnetometers 300 may be fixedly arranged in a casing of the digital device. The plurality of magnetometers 300 define a fixed position and/or orientation with respect to each other. A magnetometer plane (indicated in Fig. 1) may be defined by a plane that extends through a majority of the plurality of magnetometers 300. More specifically, the magnetometer plane may extend through centres, more specifically geometric centres, of a majority of the plurality of magnetometers 300. In other words, most of the magnetometers of the plurality of magnetometers 300 may be arranged in a common plane, i.e., the magnetometer plane. However, one or more magnetometers of the plurality of magnetometers 300 may be distanced and/or inclined with respect to the common plane, e.g., due to manufacturing issues and/or tolerances and/or manufacturing design constraints. The magnetometer plane may additionally or alternatively be defined by a plane in which the magnetometers of the plurality of magnetometers 300 are predominantly arranged. The digital device may comprise the processing unit 400 and/or the at least one output device 500. The digital device may comprise the writing support 200 and/or a writing surface or writing support surface which may be defined on the writing support. The at least one processing unit 400 may be configured to control a representation of the writing instrument 100 as a virtual object on the at least one output device 500. A movement of the virtual object on the at least one output device 500 may be based on a virtual reproduction of a determined location of the writing instrument 100. The visual reproduction may be a motion of a cursor on the output device 500. In embodiments, the visual reproduction may be any icon (e.g., an arrow, a picture). During a user operation, the nib 150 may be in contact with the writing support surface 210 (and/or writing surface) on the writing support 200. In some examples, the writing instrument 100 may include an erasing feature. In some examples, the writing instrument 100 may also be operated within the sensing volume M but not on the writing support 200 (i.e., in the air). In this case, the writing instrument 100 may be used, e.g., as a pointer. The writing instrument 100 may comprise an ink system which can dispense volatile inks. The writing instrument 100 may be a felt tip marker, a highlighter, a non-permanent or permanent marker, and the like. In some embodiments, the writing instrument 100 may be a drawing instrument, a toy, or a pen.

The magnetometers 300 may be communicatively coupled with the at least one processing unit 400, particularly to exchange magnetic field measurements. The at least one processing unit 400 may be configured to collect magnetic field measurements from the at least one magnetometer 300 (or plurality of magnetometers). The sensing volume may have an ellipsoidal form. The magnetometers 300 may be configured to measure the magnetic field created by the magnetic unit 160 in the directions of a reference coordinate system XYZ. The system 10, more specifically the digital device, may comprise the reference coordinate system XYZ. The reference coordinate system XYZ may comprise a first reference axis X, a second reference axis Y and a vertical reference axis Z. The first reference axis X and the second reference axis Y may be defined on or parallel to the magnetometer plane and may be orthogonal to each other. The vertical reference axis Z may be orthogonal to the magnetometer plane. The vertical reference axis Z may extend through a centre of the plurality of magnetometers 300. Each magnetometer 300 may be configured to perform magnetic field measurements in the direction of one axis (i.e., one dimension), two axes (i.e., two dimensions), or three axes (i.e., three dimensions). The number of magnetometers 300 provided may depend on the desired size of the sensing volume M within which writing instrument 100 is operated. The magnetometers 300 may be configured to collect magnetic field measurements associated with the magnetic unit 160 within the sensing volume M up to a maximum measurement distance, wherein the maximum measurement distance may be a distance within which the magnetic field measurements can be provided with acceptable reliability and/or accuracy. In embodiments, the maximum measurement distance may be 18cm, more specifically 15cm. During use, the magnetic unit 160 described herein may be operated within the maximum measurement distance. The minimum magnetic field generated by the magnetic unit 160 that may be tracked with system 10 may comprise at least 1 micro tesla, e.g., which may be provided within the distance as mentioned above.

The writing instrument body 110 may be an elongate, tubular body. In some embodiments, the body 110 may be symmetrical, however, this is not required. In some embodiments, the body 110 may comprise a straight or curved shape. The body 110 may comprise a cylindrical shape on the inside and/or outside. The body 110 may comprise a proximal end 112 on an opposite side relative to the distal end 111. During a writing operation, the distal end 111 is located proximal to the writing support 200 and the proximal end 112 is located distal to the writing support 200. As shown e.g., in Figs. 3A to 4B, the writing instrument body 110 may be closed at the proximal end 112.

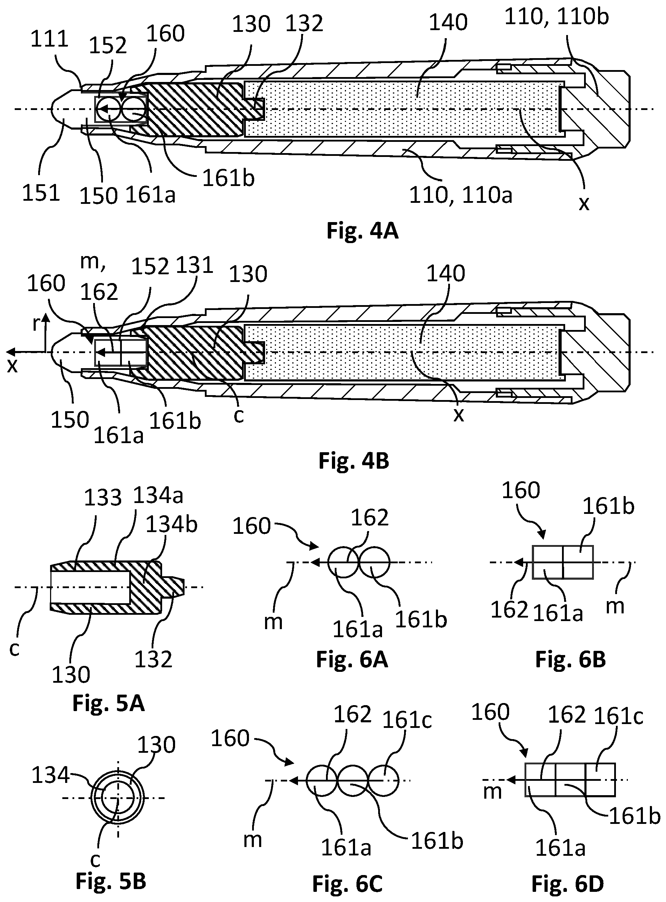

The magnetic unit 160 may be configured to generate a magnetic field. The magnetic unit 160 may be or may comprise at least one magnetic object. In some embodiments, the magnetic unit 160 may be a permanent magnet, more specifically a single permanent magnet. As shown in Figs. 3A to 4B, the magnetic unit 160 may comprise at least two magnetic objects 161a, 161b, 161c each configured to generate a magnetic field and being coupled with each other. Figs. 6A to 6D illustrate configurations of the magnetic unit 160 with at least two magnetic objects 161a, 161b, 161c. In the embodiment shown in Figs. 6A and 6B, the magnetic unit 160 comprises two magnetic objects 161a, 161b. In the embodiment shown in Figs. 6C and 6D, the magnetic unit 160 comprises three magnetic objects 161a, 161b, 161c each configured to generate a magnetic field and coupled with each other. However, in some embodiments, the magnetic unit 160 may comprise more than three magnetic objects, e.g., four, five, or six magnetic objects. As shown in Figs. 6A and 6C, each magnetic object 161a, 161b, 161c (or in case only one magnetic object is provided "the" magnetic object or magnetic unit) may comprise a spherical shape. In this case, the magnetic objects 161a, 161b, 161c may be spherical magnets (or ball magnets). In some embodiments as indicated in Figs. 6B and 6D, each magnetic object 161a, 161b, 161c may comprise a cylindrical shape. In some embodiments (not shown in the Figs.), the magnetic unit 160 or each magnetic object may comprise a ring shape. Each magnetic object 161a, 161b, 161c described herein may be a permanent magnet. The magnetic objects 161a, 161b, 161c may be magnetically coupled with each other. In some embodiments, the at least two magnetic objects 161a, 161b, 161c may be firmly coupled with each other, i.e., not movable relative to each other. In some embodiments, the magnetic unit 160 described herein may be a first magnetic unit and the writing instrument 100 may comprise at least one second magnetic unit coupled with the writing instrument 100. The first magnetic unit may be separated and distanced from the at least one second magnetic unit. The principles described herein for the magnetic unit 160 may also apply to the at least one second magnetic unit.

The term "magnetic object" may refer to an object which may comprise components of or may be made of magnetic material, i.e., a material that has magnetic properties measurable by at least one magnetometer 300. In embodiments, the magnetic object(s) 161a, 161b, 161c may be configured to generate a non-zero magnetic field. They may comprise a paramagnetic or diamagnetic material. In embodiments, the magnetic objects 161a, 161b, 161c may comprise a ferromagnetic material or a ferrimagnetic material. The magnetic objects may be configured to create or generate a symmetric magnetic field, more specifically wherein the magnetic field may be rotationally symmetric. A rotation of the magnetic objects may thus be detectable about a first rotation axis and a second rotation axis of the magnetic objects, more specifically wherein the first rotation axis may be perpendicular to the second rotation axis. However, a rotation about a third rotation axis (being perpendicular to the first rotation axis and the second rotation axis) may not be detectable since the magnetic field may be rotationally symmetric. The magnetic object may be axially magnetized in this case (see, e.g., magnetization axis or magnetic moment vector 162). However, in some embodiments (not shown), the magnetic object(s) may comprise a magnetization axis being at an orientation with respect to the magnetic object such that a rotation of the magnetic field may be detectable about a first rotation axis, a second rotation axis and a third rotation axis of the magnetic object. In this case the magnetic object(s) may be configured to create or generate an asymmetric magnetic field, more specifically wherein the magnetic field may be rotationally asymmetric. This may be the case for a magnetic object being width magnetized or thickness magnetized.

As mentioned above, the plurality of magnetometers 300 may be configured to generate magnetic field measurements associated with the magnetic field of the magnetic unit 160 or magnetic fields of the magnetic objects. More specifically, the plurality of magnetometers 300 may be configured to measure the (resulting) magnetic field which is based on the sum of the magnetic fields of each magnetic object (i.e., the superposition of the magnetic fields of each magnetic object). The (resulting) magnetic field of the magnetic unit 160 may also be described with a magnetic signature the magnetic unit 160 comprises. In other words, the magnetic unit 160 may be configured to define a magnetic signature. The magnetic signature may be detectable with the plurality of magnetometers 300. The magnetic signature may be indicative of magnetic field strength (e.g., intensity), magnetic field shape (e.g., shape, symmetry, deformation) and/or magnetic field location (e.g., position, orientation including direction). The magnetic signature of the magnetic unit 160 may comprise a set of vectors describing a magnetic vector field of the magnetic objects (more specifically, the resulting magnetic field of the magnetic unit 160). As already mentioned above, the magnetic unit 160 may comprise the magnetic moment vector and/or a magnetic position vector associated with the magnetic field. In other words, the magnetic unit 160 may be modeled as a magnetic dipole being defined by the magnetic moment vector and/or the magnetic position vector. The magnetic moment vector and/or the magnetic position vector may be used to determine a magnetic field change and/or a location change of the writing instrument 100 during a writing operation. The magnetic moment vector may define a magnetic unit orientation and/or a magnetic unit strength, i.e., the magnetic field strength of the magnetic unit 160. The magnetic unit strength may be related to the magnetization of the magnetic unit 160 and its volume.

As shown in Figs. 3A to 4B and 6A to 6D, the magnetic unit 160 may comprise a magnetic unit longitudinal axis m. The magnetic unit 160 may be arranged in the body 110 such that the magnetic unit longitudinal axis m is substantially coaxial with the body longitudinal axis x. The magnetic unit 160 may define a magnetic moment vector 162. The magnetic unit 160 may be arranged in the body 110 such that the magnetic moment vector 162 is substantially coaxial with the body longitudinal axis x. In some embodiments, e.g., as shown in Figs. 3A to 3B, the magnetic unit 160 may be arranged in the body 110 such that the magnetic moment vector 162 extends through the nib 150. The magnetic moment vector 162 may extend in the direction of the nib 150, i.e., the magnetic unit 160 may be configured such that the magnetic moment vector 162 points towards the nib 150. More specifically, the magnetic unit 160 may be arranged in the body 110 such that the magnetic moment vector 162 extends through a contact point or surface of the nib 150. Thereby, accuracy during location determination and/or tracking of the writing instrument 100 may be increased during writing operation. The contact point or surface of the nib 150 may be the point or surface which is mainly in contact with a writing surface or writing support surface 210 during a writing operation. In more detail, the contact point or surface of the nib 150 may be substantially invariant in different 3D locations of the writing instrument 100 on the writing surface, e.g., when the writing instrument 100 tilted in different directions and/or with different tilting angles, or rotated while touching the writing surface. Additionally or alternatively, the contact point or surface may be substantially invariant in term of height when the writing instrument 100 is tilted in different directions and/or with different tilting angles while touching the writing surface or writing support surface 210. This definition may particularly refer to the case when the nib 150 is not worn. In some embodiments, the contact point or surface may be the most distal point or surface of the nib 150.

In applications, the magnetic unit 160 may be or may comprise at least one magnetic object 161a, 161b, 161c having a shape with the magnetic unit longitudinal axis m about which the magnetic unit 160 is rotationally symmetric, for example the ring shape or the cylinder shape. When the magnetic unit 160 with a rotationally symmetric magnetic field is desired, in an ideal case, the magnetic moment vector 162 (or magnetization direction) coincides with the magnetic unit longitudinal axis m about which the magnetic unit 160 is rotationally cylindrical. However, an almost perfect alignment of the magnetic moment vector 162 (e.g. less than 0.5° angular deviation) and magnetic unit longitudinal axis m are very complex and expensive. Such angular deviation can cause errors in orientation measurements of the magnetic unit 160 and thus in inaccurate location determination and/or tracking of the writing instrument 100. However, such angular deviation may be reduced or eliminated, as also described, e.g., in patent application EP4390636A1. Referring to some embodiments of the present disclosure, the magnetic unit 160 may comprise at least two magnetic objects 161a, 161b, 161c which may commonly define the magnetic moment vector 162 and may be coupled, more specifically firmly coupled with each other, and rotationally oriented relative to each other such that the magnetic moment vector 162 may be substantially coaxial with the magnetic unit longitudinal axis m. In other words, the magnetic objects 161a, 161b, 161c being coupled with each other together form the magnetic unit longitudinal axis m, as well as the resulting magnetic moment vector 162. Due to the magnetic unit 160 being arranged in the writing instrument 100 such that the magnetic unit longitudinal axis m and/or the magnetic moment vector 162 may be substantially coaxial to the body longitudinal axis x, an angular deviation can be reduced. Improved location determination and/or tracking of the writing instrument 100 can be provided without the usage of complex and/or costly estimation models. In case the magnetic unit 160 comprises at least two magnetic objects 161a, 161b, 161c being provided in the form of spherical magnets, these may magnetically couple with each other and self-align with each other such that the magnetic unit longitudinal axis m and/or the magnetic moment vector 162 may be substantially coaxial (i.e., in this case the deviation mentioned above may be minimal). In some embodiments, the at least two magnetic objects 161a, 161b, 161c described above may be aligned with each other by applying an external magnetic field on the magnetic unit 160 such the at least two magnetic objects 161a, 161b, 161c align along this applied external magnetic field.

In some embodiments (see, e.g. Figs. 3A to 4B), the magnetic unit 160 may be coupled with the body 110 such that relative movement between the magnetic unit 160 and the body 110, particularly in the direction of the longitudinal body axis x, can be prevented. The magnetic unit 160 may be coupled with the body 110 such that relative movement in the radial direction r and/or rotation of the magnetic unit 160 relative to the body 110 is prevented. Thereby, the location of the magnetic unit 160 relative to the writing instrument 100 is known, resulting in improved accuracy during location determination and tracking of the writing instrument 100. The magnetic unit 160 may be clamped between the nib 150 and the reservoir 140, more specifically in the direction of the body longitudinal axis x.

Referring to Figs. 3A to 4B, the body 110 may include a first body portion 110a comprising the writing orifice 120 and the distal end 111 and a second body portion 110b, more specifically comprising the proximal end 112. The first body portion 110a may be removably coupled with the second body portion 110b. The first and second body portions 110a, 110b may be configured to facilitate removal of the nib 150 and/or the magnetic unit 160. In embodiments, the reservoir may be part of body 110, e.g., of the second body portion 110b. In the embodiments shown in Figs. 3A to 4B, the reservoir 140 may be a separate component and/or may be releasably coupled with the body 110, e.g., for replacement. The reservoir 140 may be configured to store a writing ink or other liquid to be dispensed on the writing surface during a writing operation. In some embodiments, the reservoir 140 may comprise a filter, a tube or container which may be fillable (or filled) with writing ink (commonly known as a free-ink system). Based on capillary force, the writing ink may be transported to be nib 150. In some embodiments, the writing instrument 100 may be configured such that the reservoir 140 is refillable. The writing instrument 100 may comprise a cap releasably couplable to the body 110 at the distal end 111 thereof (not shown in the Figs.), to protect the nib 150 when the writing instrument 100 is not used.

Referring to Figs. 3A to 5B, the writing instrument 100 may comprise a coupling component 130 configured to establish fluid communication between the nib 150 and the reservoir 140. A distal end portion 131 of the coupling component 130 may be coupled to the nib 150 and a proximal end portion 132 of the coupling component 130 may be coupled to the reservoir 140. The coupling component 130 may be a capillary or feeder configured to supply the or promote the flow of writing ink from the reservoir 140 to the nib 150. In the embodiments illustrated in Figs. 3A to 4B, the reservoir 140 may comprise a fibrous and/or porous material. The nib 150 may comprise fibrous and/or porous material. The coupling component 130 may comprise a fibrous and/or porous material, wherein the coupling component 130 may be configured to transport ink (e.g., by wicking and/or capillary force) from the reservoir 140 to the nib 150. In some embodiments, the material of the reservoir 140, the nib 150 and/or the coupling component 130 may be the same or may differ, e.g., in terms of porosity (or pore volume). As an example, the nib 150 may comprise a first material having a first porosity and the coupling component 140 may comprise a second material comprising a second porosity. The porosity of the first material may be lower than the porosity of the second material. The material used may be sintered plastics, fiber, foam or membranes. In general, materials with a capillary/porous network (open porosity) can be used. The material may be configured to allow for ink flow in the writing instrument 100, more specifically, the material may be configured (and may comprise a porosity adapted) to transport writing ink from the reservoir 140 to the nib 150 via the coupling component 130. In some embodiments, an extruded or sintered material may be used. In some embodiments, the coupling component 130, the reservoir 140 and/or the nib 150 may comprise a sintered porous material. In some embodiments, the material may be Polyethylene (PE), Polypropylene (PP), Polyamide (Nylon) or (thermoplastic) elastomers. Additionally or alternatively, the material may comprise a fiber-based or fibrous material and may comprise polyester, Poly(methyl methacrylate) (acrylic), or Nylon, and/or a non-woven material like polyester felt or wool felt. The porosity (pore volume) and/or pore size of the material may be adapted to the physical-chemical properties of the ink used for the writing instrument 100. In case a sintered porous material is used, the pore size may range from 5 to 300 microns. The pore volume may be from 25% to 60%, more specifically from 28% to 40%, in particular from 30% to 35%. In an example, the coupling component 130 may comprise a sintered porous material in the form of Polyethylene (PE) with a pore volume of 25% to 60%, more specifically from 28% to 40%, in particular from 30% to 35%. In case a fiber-based or fibrous material is used, the pore volume may be from 40% to 80%, more specifically from 50% to 75%.

As shown in Figs. 3A to 5B, the coupling component 130 may comprise a coupling component longitudinal axis c. The coupling component 130 may be arranged in the body 110 such that the coupling component longitudinal axis c is substantially coaxial with the body longitudinal axis x. The coupling component 130 and/or the nib 150 may be configured to couple the magnetic unit 160 to the body 110. In more detail, the magnetic unit 160 may be clamped between the nib 150 and the coupling component 130 such that relative movement of the magnetic unit 160 to the body 110 is prevented, particularly along the body longitudinal axis x. The nib 150, the magnetic unit 160 and the coupling component 130 may be removably coupled with the body 110. The magnetic unit 160 may be removably coupled with the coupling component 130 and/or the nib 150.

As illustrated in the embodiment of Figs. 3A and 3B, the coupling component 130 may comprise a component receptable 133, more specifically with a shape adapted to the magnetic unit 160, e.g., a cylindrical shape. The magnetic unit 160 may be at least partially, or entirely, arranged in the component receptable 133. The magnetic unit 160 may be detachably coupled to the coupling component 130. In some embodiments, the component receptacle 133 may extend along the body longitudinal axis x and may be oriented towards the nib 150. The component receptacle 133 may extend in the coupling component 130 at least partially along the coupling component longitudinal axis c, more specifically in the distal end portion 131 of the coupling component 130. The component receptacle 133 may be provided as a drilled blind hole. In embodiments, the distal end portion 131 may be configured to receive a portion of the nib 150 in the component receptacle 133. In other embodiments, the nib 150 may comprise a receptacle configured to receive the distal end portion 131 of the coupling component 130 (not shown in the Figs.). The magnetic unit 160 may be held in the component receptacle 133 between the coupling component 130 and the nib 150. The coupling component 130 may be supported by the body 110. The coupling component 130 may support the (proximal) portion of the nib 150 in the body 110.

Referring to Fig. 5A, the coupling component 130 may comprise a first section 134a with a first porosity and at least one second section 134b with a second porosity different than the first porosity. The first porosity may be higher than the second porosity. The first section 134a may be arranged at the distal end portion 131. In case the receptacle 133 is provided, the first section 134a may extend at least partially along the receptacle 133 and may be configured to promote the transport of ink from the reservoir 140 to the nib 150. The section with higher porosity may thus be arranged in an area where the coupling component 130 has a reduced cross-section due to the arrangement of the magnetic unit 160. In some embodiments (not shown in the Figs.), the body 110 may comprise at least one channel on an inner circumference and extending at least partially along the length of the coupling component 130 and/or the nib 150 to promote the transport of ink from the reservoir 140 to the nib 150. In examples, the at least one channel may be arranged in the body 110 adjacent to the magnetic unit 160. The at least one channel 134 may be filled with a material having a higher porosity than the material of the coupling component 130 and/or the nib 150. The at least one channel may be arranged in the area where the nib 150 and/or the coupling component 140 comprises a reduced cross-section due to the arrangement of the magnetic unit 160.

Referring to the embodiment shown in Figs. 4A and 4B, which may be combined with the embodiment of Figs. 3A and 3B, the nib 150 may comprise a nib receptacle 152 facing proximally. The magnetic unit 160 may be at least partially, or entirely, arranged in the nib receptacle 152. The nib receptacle 152 may be a cylindrical receptacle. The entire magnetic unit 160 may be arranged in the nib receptacle 152 or in the component receptacle 133. In embodiments, a portion of the magnetic unit 160 may be arranged in the component receptacle 133 and another portion of the magnetic unit 160 may be arranged in the nib receptacle 152. The nib receptacle 152 may extend along the body longitudinal axis x and may be oriented (or face) towards the coupling component 130. The magnetic unit 160 may be held, more specifically by clamping, between the coupling component 130 and the nib 150.

Referring to Figs. 3A to 5B, the proximal end portion 132 of the coupling component 130 may comprise a tapered shape and may be configured to extend into the reservoir 140. Due to the tapered shape, insertion into and/or coupling with the reservoir 140 may be facilitated. In the embodiments shown, the coupling component 130 may be designed as one-piece. In some embodiments (not shown), the reservoir 140 and the coupling component 130 may be designed as one-piece. In other embodiments, the nib 150 and the coupling component 130 may be designed as one-piece. In yet other embodiments, the reservoir 140, the coupling component 130 and the nib 150 may be designed as one-piece.

In some embodiments (not shown in the Figs.), the writing instrument 100 may comprise all features and/or embodiments as described herein. However, the magnetic unit 160 may comprise a ring shape with a lumen extending therethrough in the direction of the body longitudinal axis x. The coupling component 130 may be configured to extend through the magnetic unit 160 (more specifically it may be at least partially arranged in the lumen) and may be coupled to the nib 150 at the distal end portion 131 and to the reservoir 140 on the proximal end portion 132. In other words, in this case the magnetic unit 160 can be placed on the outer circumference of the coupling component 130. Also, in this case, the magnetic unit 160 may be removably coupled with the coupling component 130. In an example, this embodiment may be applied when the coupling component 130, the nib 150 and/or the reservoir 140 are designed as one-piece (e.g., for embodiments where the magnetic unit 160 cannot be integrated within the nib 150 and/or coupling component 130 designed as one-piece and be removed at the same time).

Another aspect of the present disclosure may be directed to the use of a writing instrument 100 according to the first aspect of the present disclosure with a tracking system for determining and/or tracking a location of the writing instrument 100. The tracking system may comprise the features of the system 10 as described herein. In examples, the tracking system may comprise a plurality of magnetometers 300 configured to create a sensing volume and configured to measure a magnetic field associated with the magnetic unit 160. The tracking system may be configured to track movement and/or location of the writing instrument 100 in at least five degrees of freedom based on the magnetic field measurements.

According to another aspect of the present disclosure, a method of assembling the writing instrument 100 as disclosed herein is provided. The method comprises providing the writing instrument body 110 including a body longitudinal axis x and a writing orifice 120 at a distal end 111 of the body 110. Furthermore, the method comprises providing the reservoir 140 for storing a writing ink, the nib 150 and the magnetic unit 160. The method comprises coupling the nib 150, the reservoir 140 and the magnetic unit 160 with each other and to the body 110 such that the nib 150 is arranged distally to the reservoir 140 and in fluid communication with the reservoir 140, the magnetic unit 160 is arranged between the reservoir 140 and a distal end portion 151 of the nib 150, the reservoir 140 is arranged proximally to the writing orifice 120, the nib 150 extends substantially along the body longitudinal axis x, the distal end portion 151 protrudes through the writing orifice 120 and the magnetic unit 160 is arranged in the body 110.

In some embodiments, the method may further comprise providing a coupling component 130 configured to establish fluid communication between the nib 150 and the reservoir 140, disposing the magnetic unit 160 in a component receptacle 133 of the coupling component 130 and/or a nib receptacle 152 of the nib 150 such that the magnetic unit 160 is held between the coupling component 130 and the nib 150, and coupling a distal end portion 131 of the coupling component 130 to the nib 150 and a proximal end portion 132 of the coupling component 130 to the reservoir 140. In some embodiments as described above, the magnetic unit 160 may comprise a ring shape and the coupling component 130 may extend through the magnetic unit 160. In this case, the method may comprise pushing the coupling component 130 through the magnetic unit 160, coupling a distal end portion 131 of the coupling component 130 to the nib 150 and a proximal end portion 132 of the coupling component 130 to the reservoir 140.

The sequence of coupling the individual components with each other may be varied. In an example, the nib 150, the coupling component 130, the reservoir 140 and the magnetic unit 160 may be first coupled with each other to form a magnetic unit assembly. The assembly may then be coupled with the body 110, i.e., arranged within the body 110.

Methods for determining and/or tracking the location of a writing instrument 100 with a magnetic unit 160 based on magnetometer measurements within a sensing volume and associated algorithms are known in the prior art, for example as described in US 2020/116524 A1 or US 2015/057969 A1. The features described may analogously apply for the magnetic unit 160 (and magnetic objects) of this disclosure. A method may comprise determining at least one magnetic unit location within the sensing volume M created by the at least one magnetometer 300 based on obtained magnetic field measurements. The method may comprise defining a reference coordinate system XYZ (i.e., the reference coordinate system as described above). Determining a magnetic unit location may comprise determining an absolute magnetic unit location indicative of a position and/or an orientation of the magnetic unit relative to the reference coordinate system XYZ. The absolute magnetic unit location may be determined based on implementing a mathematical model associating each measurement of the magnetometers 300 with a location of the magnetic unit in the reference coordinate system XYZ. Each magnetometer of the plurality of magnetometers 300 may be a vector magnetometer and may be configured to measure the magnetic field in one, two or three dimensions. In an embodiment, a Coulomb model may be implemented, which may allow a modeling of complex magnetizations of the magnetic unit 160. In examples, a Dipolar model, an Amperian model and/or Mapping based on a Look-Up Table (LUT) may be implemented. In some embodiments, the method may comprise determining a writing instrument location. Determining a writing instrument location may comprise determining a relative magnetic unit location indicative of a relative position and/or a relative orientation of the magnetic unit 160 relative to the writing instrument 100, more specifically to a writing instrument coordinate system. Determining a relative magnetic object location may be based on the absolute magnetic unit location as described above and a set of geometric parameters. The set of geometric parameters may comprise predefined geometric parameters indicative of a geometric position and a geometric orientation of the magnetic unit 160 relative to the writing instrument 100, more specifically relative to the nib 150, or contact point or surface, of the nib 150. In other words, based on the determined absolute location of the magnetic unit 160 and the knowledge of the arrangement of the magnetic unit 160 relative to or within writing instrument 100, the writing instrument location may be known. In addition, the location of the writing support 200, writing support surface 210 (and writing surface) may be known. Based on the determined writing instrument location and known location of the writing support 200 (and the surfaces), the location of the writing instrument 100 may be determined and/or tracked relative to the writing support 200 and/or writing support surface 210.

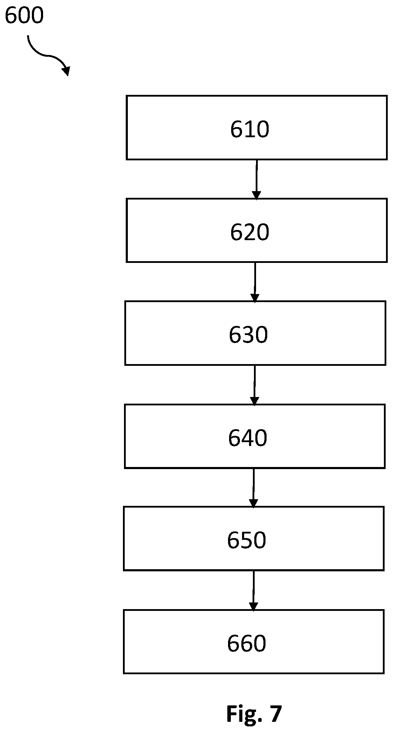

According to an aspect of the present disclosure, as indicated in Fig. 7, a method 600 may be a computer-implemented method. The computer-implemented method 600 may be configured for identifying a writing instrument 100, more specifically for identifying writing instrument information. The computer-implemented method 600 may include the method steps as described above. In some embodiments, the computer-implemented method 600 may be configured to control a representation of a writing instrument operation by a user and/or may be configured to control a virtual reproduction of a writing instrument and/or a writing operation of the writing instrument 100 on the writing surface. The computer-implemented method 600 may comprise:
a) obtaining magnetic field measurements 610 associated with a magnetic unit 160 of a writing instrument 100 according to the aspects of the present disclosure and measured with a plurality of magnetometers 300,
b) detecting a magnetic signature 620 of the magnetic unit 160 based on the obtained magnetic field measurements, and
c) identifying writing instrument information 630 based on the detected magnetic signature.

As indicated in Fig. 7, the computer-implemented method 600 may further comprise controlling a virtual reproduction 640 of the writing instrument 100 and/or a writing operation of the writing instrument 100 on a writing surface by a user based on the identified writing instrument information. Controlling the virtual reproduction may comprise adapting and/or selecting at least one setting of the virtual reproduction based on the identified writing instrument information. The setting may be a digital setting. The setting may comprise one or more of a color, shape, size, and type of the virtual reproduction of the writing instrument 100. The magnetic signature may include one or more of a magnetic field strength, a magnetic field shape, and a magnetic field location. The magnetic field shape may be indicative of a symmetry and/or deformation of the magnetic field. The magnetic field location may comprise a position and/or orientation (including a direction) of the magnetic field of the writing instrument 100. Writing instrument information may include one or more of a type, a color, a nib type and a nib shape of the writing instrument 100. The types may include for example: eraser, pen, fountain pen, multicolour pen, highlighter, gel pen, ball point pen, spindle, etc.

Identifying writing instrument information based on the detected magnetic signature may comprise accessing a database comprising a predefined data list which correlates writing instrument information to the magnetic signature, and selecting writing instrument information of the predefined data list based on a match of writing instrument information and magnetic signature. In examples, the predefined data list may comprise different types of writing instruments (e.g., pen, fountain pen, multicolor pen, eraser, highlighter, etc.) and/or their respective characteristics (e.g., variable nib sizes/thickness, different colors, etc.), associated with respective magnetic signatures. In an example, in case the magnetic unit 160 comprises at least two magnetic objects in the form of spherical magnets, the magnetic signature defined by this magnetic unit may be linked to a specific type of writing instrument and/or respective characteristics. For example, the magnetic field strength may be linked to the type of writing instrument and the magnetic field shape may be linked to a specific nib size/shape and/or color. Based on the magnetic signature, the associated writing instrument information can be identified. Writing instrument information may then be used for adapting and/or selecting the at least one setting of the virtual reproduction. Consequently, the resulting effect on the virtual reproduction of the writing instrument operated on a "virtual" paper (e.g., the writing surface being implemented as a virtual writing surface) may be dependent on writing instrument information and magnetic signature. This may include providing at least one of a substantially different line, effect, drawing compared to the other type.

According to an aspect of the present disclosure, a kit of parts comprises a writing instrument 100 according to the aspects of the present disclosure. The magnetic unit 160 can be a first magnetic unit. The kit of parts comprises at least one second magnetic unit. The first magnetic unit (e.g., comprising spherical magnets) may be configured to define a first magnetic signature and the at least one second magnetic unit (e.g., comprising cylindrical magnets) may be configured to define a second magnetic signature, the first magnetic signature being different from the second magnetic signature. The computer-implemented method described above may identify first writing instrument information based on the first magnetic signature. In case a user replaces the first magnetic unit with the at least one second magnetic unit, the computer-implemented method described above may identify second writing instrument information, which may be different than first writing instrument information. Accordingly, the virtual representation based on the second writing instrument information may be different from the virtual representation based on the first writing instrument information.

The computer-implemented method may further comprise determining and/or tracking a location 650 of the writing instrument 100 based on the magnetic signature, more specifically relative to the writing surface. The computer-implemented method may comprise controlling the virtual reproduction 640 based on the determined and/or tracked location of the writing instrument 100. The computer-implemented method may comprise representing the controlled virtual reproduction 660 on at least one output device 500, more specifically wherein the representation and/or movement of the virtual reproduction on the at least one output device 500 is based on the writing instrument information and/or based on the determined and/or tracked location of the writing instrument 100 relative to writing surface.

In embodiments, as indicated in Fig. 7, the method 600 may further comprise applying a filter for filtering the determined magnetic unit location and/or the writing instrument location. Magnetic and electronic noise, as well as environmental variations may lead to non-smooth location determinations over time. Based on the filtering, a smooth location trajectory of the magnetic may be achieved. For filtering, optimization algorithms or recursive Bayesian estimation such as a Kalman filter may be applied, more specifically an extended Kalman filter or an unscented Kalman filter. In some embodiments, a low-pass filter may be used in combination with a Kalman filter. In embodiments, the magnetic unit 160 may be tracked over a time period comprising multiple time samples. At each time sample, the method may comprise determining the magnetic unit location. The method may further comprise storing the determined and/or detected features for each time sample. Furthermore, the method may be configured to take into account (more specifically to remove) external magnetic fields, e.g. the earth magnetic field. As mentioned above, the method may be a computer-implemented method. In some embodiments, the processing unit(s) 400 of the system 10 may be configured to execute the computer-implemented method. A computer system may be configured to execute the computer-implemented method as described above. A computer program may be configured to execute the computer-implemented method as described above. Furthermore, a computer-readable medium or signal storing the computer program may be provided. The above-described computer-implemented method can comprise or be executable via a computer or a network of computers, the computer or network of computers comprising at least one processing unit (e.g., a processor, and/or the processing unit(s) 400 as described above) and at least one data storage (i.e., memory). The described procedural logic may be held in the form of executable code in at least one data storage and executed by the at least one processing unit. In examples, the computer-implemented method may be executed on an embedded system comprising at least one microprocessor such as a microcontroller (MCU) or a digital signal processing (DSP) processor. The system 10 may send data to the at least one processing unit and, in examples, they may also receive instructions from the at least one processing unit. The processing unit may thereby direct user-initiated and/or automatically generated queries to the system 10. The system 10 is not limited to a particular hardware environment. Thus, distributed devices coupled via a network may perform the techniques described herein. The disclosure also includes electrical signals and computer-readable media defining instructions that, when executed by a processing unit, implement the techniques described herein. The system 10 may comprise at least one database. Alternatively, or in addition, the system 10 may access a database in a cloud (via a communication interface). The system 10 may comprise at least one communication interface to couple the processing unit(s) 400 and/or the database. The communication interface may comprise one or more of a network, internet, a local area network, a wireless local area network, a broadband cellular network, and/or a wired network. In examples, the system 10 may couple to one or more features via a server hosted in a cloud. The processing unit(s) 400 mentioned above may be communicatively coupled with other processing units external to the system 10.

Although the above principles have been described for a system 10 and a writing instrument 100, multiple writing instruments 100 may be provided. In an example, the system 10 may comprise a plurality of writing instruments 100 operated (e.g., manipulated by a user U) within the sensing volume M created by the magnetometer(s). Although the above principles have been described for a magnetic unit 160 of the writing instrument 100, additional magnetic units may be provided and the above principles may also apply to these additional magnetic units.

Although the present invention has been described above and is defined in the attached claims, it should be understood that the invention may alternatively be defined in accordance with the following embodiments:
1. A writing instrument (100), comprising:
   a writing instrument body (110) comprising a body longitudinal axis (x) and a writing orifice (120) at a distal end (111) of the body (110),
   a reservoir (140) for storing a writing ink arranged proximally to the writing orifice (120),
   a nib (150) arranged distally to the reservoir (140) and in fluid communication with the reservoir (140), wherein the nib (150) extends along the body longitudinal axis (x) and comprises a distal end portion (151) protruding through the writing orifice (120), and a magnetic unit (160) arranged in the body (110) between the reservoir (140) and the distal end portion (151) of the nib (150).
2. The writing instrument (100) according to embodiment 1, wherein the magnetic unit (160) is configured to generate a magnetic field.
3. The writing instrument (100) according to embodiment 1 or embodiment 2, wherein the magnetic unit (160) comprises at least two magnetic objects (161a, 161b, 161c) each configured to generate a magnetic field and coupled with each other.
4. The writing instrument (100) according to any one of the preceding embodiments, wherein the magnetic unit (160) comprises a magnetic unit longitudinal axis (m), and wherein the magnetic unit (160) is arranged in the body (110) such that the magnetic unit longitudinal axis (m) is coaxial with the body longitudinal axis (x).
5. The writing instrument (100) according to any one of the preceding embodiments, wherein the magnetic unit (160) defines a magnetic moment vector (162).
6. The writing instrument (100) according to embodiment 5, wherein the magnetic unit (160) is arranged in the body (110) such that the magnetic moment vector (162) is substantially coaxial with the body longitudinal axis (x).
7. The writing instrument (100) according to embodiment 5 or embodiment 6, wherein the magnetic unit (160) is arranged in the body (110) such that the magnetic moment vector (162) extends through the nib (150), more specifically wherein the magnetic moment vector (162) extends in the direction of the nib (150), optionally wherein the magnetic moment vector (162) extends substantially through a contact point or surface of the nib (150).
8. The writing instrument (100) according to any one of embodiments 3 to 7, when dependent on embodiment 3, wherein the at least two magnetic objects (161a, 161b, 161c) define the magnetic moment vector (162) and are coupled and rotationally oriented relative to each other such that the magnetic moment vector (162) is substantially coaxial with a magnetic unit longitudinal axis (m).
9. The writing instrument (100) according to any one of embodiments 3 to 8, when dependent on embodiment 3, wherein the at least two magnetic objects (161a, 161b, 161c) are firmly coupled with each other.
10. The writing instrument (100) according to any one of embodiments 3 to 9, when dependent on embodiment 3, wherein each magnetic object (161a, 161b, 161c) is a permanent magnet.
11. The writing instrument (100) according to any one of embodiments3 to 10, when dependent on embodiment 3, wherein each magnetic object (161a, 161b, 161c) comprises a spherical shape.
12. The writing instrument (100) according to any one of embodiments 3 to 10, when dependent on embodiment 3, wherein each magnetic object (161a, 161b, 161c) comprises a cylindrical shape or a ring shape.
13. The writing instrument (100) according to any one of the preceding embodiments, wherein the writing instrument (100) is electrically and/or electronically passive.
14. The writing instrument (100) according to any one of the preceding embodiments, wherein the nib (150) is removably coupled to the body (110).
15. The writing instrument (100) according to any one of the preceding embodiments, wherein the magnetic unit (160) is removably coupled to the body (110).
16. The writing instrument (100) according to any one of the preceding embodiments, wherein the magnetic unit (160) is coupled with the body (110) such that relative movement between the magnetic unit (160) and the body (110) is prevented.
17. The writing instrument (100) according to any one of the preceding embodiments, wherein the magnetic unit (160) is clamped between the nib (150) and the reservoir (140), more specifically in the direction of the body longitudinal axis (x).
18. The writing instrument (100) according to any one of the preceding embodiments, wherein the body (110) comprises a first body portion (110a) comprising the writing orifice (120) and the distal end (111), and a second body portion (110b), wherein the first body portion (110a) is removably coupled with the second body portion (110b).
19. The writing instrument (100) according to any one of the preceding embodiments, wherein the nib (150) comprises a fibrous and/or porous material.
20. The writing instrument (100) according to any one of the preceding embodiments, wherein the reservoir (140) is part of the body (110), or releasably coupled with the body (110).
21. The writing instrument (100) according to any one of the preceding embodiments, wherein the reservoir (140) comprises a fibrous and/or porous filler material.
22. The writing instrument (100) according to any one of the preceding embodiments, wherein the writing instrument (100) comprises a cap releasably couplable to the body (110) at the distal end (111) thereof.
23. The writing instrument (100) according to any one of the preceding embodiments, comprising a coupling component (130) configured to establish fluid communication between the nib (150) and the reservoir (140), more specifically wherein a distal end portion (131) of the coupling component (130) is coupled to the nib (150) and a proximal end portion (132) of the coupling component (130) is coupled to the reservoir (140).
24. The writing instrument (100) according to embodiment 23, wherein the coupling component (130) comprises a fibrous and/or porous material, wherein the coupling component (130) is configured to transport ink from the reservoir (140) to the nib (150).
25. The writing instrument (100) according to embodiment 23 or embodiment 24, wherein the proximal end portion (132) of the coupling component (130) comprises a tapered shape and is configured to extend into the reservoir (140).
26. The writing instrument (100) according to any one of embodiments 23 to 25, wherein the coupling component (130) is designed as one piece.
27. The writing instrument (100) according to any one of embodiments 23 to 26, wherein the coupling component (130) comprises a coupling component longitudinal axis (c), wherein the coupling component (130) is arranged in the body (110) such that the coupling component longitudinal axis (c) is coaxial with the body longitudinal axis (x).
28. The writing instrument (100) according to any one of embodiments 23 to 27, wherein the coupling component (130) and/or the nib (150) couples the magnetic unit (160) to the body (110), more specifically wherein the magnetic unit (160) is clamped between the nib (150) and the coupling component (130) such that relative movement of the magnetic unit (160) to the body (110) is prevented.
29. The writing instrument (100) according to any one of embodiments 23 to 28, wherein the nib (150), the magnetic unit (160) and the coupling component (130) are removably coupled with the body (110), and wherein the magnetic unit (160) is removably coupled with the coupling component (130) and the nib (150).
30. The writing instrument (100) according to any one of embodiments 23 to 29, wherein the coupling component (130) comprises a component receptable (133), wherein the magnetic unit (160) is at least partially arranged in the component receptable (133).
31. The writing instrument (100) according to embodiment 30, wherein the component receptacle (133) extends along the body longitudinal axis (x) and faces towards the nib (150).
32. The writing instrument (100) according to embodiment 30 or embodiment 31, wherein the distal end portion (131) is configured to receive a portion of the nib (150) in the component receptacle (133), wherein the magnetic unit (160) is held in the component receptacle (133) between the coupling component (130) and the nib (150).
33. The writing instrument (100) according to any one of embodiments 30 to 32, wherein the coupling component (130) comprises a first section (134a) with a first porosity and at least one second section (134b) with a second porosity different than the first porosity, wherein the first section (134a) extends at least partially along the receptacle (133) and is configured to promote the transport of ink from the reservoir (140) to the nib (150).
34. The writing instrument (100) according to any one of the preceding embodiments, wherein the nib (150) comprises a nib receptacle (152) facing proximally, and wherein the magnetic unit (160) is at least partially arranged in the nib receptacle (152).
35. The writing instrument (100) according to embodiment 34, when dependent on any one of embodiments 23 to 33, wherein the nib receptacle (152) extends along the body longitudinal axis (x) and faces towards the coupling component (130).
36. The writing instrument (100) according to embodiment 34 or embodiment 35, when dependent on any one of embodiments 23 to 33, wherein the magnetic unit (160) is arranged in the nib receptacle (152) and wherein the magnetic unit (160) is held between the coupling component (130) and the nib (150).
37. A system (10) for determining and/or tracking a location of a writing instrument (100), the system (10) comprising:
   a writing instrument (100) according to any one of the preceding embodiments, and
   a plurality of magnetometers (300) configured to create a sensing volume and configured to measure a magnetic field associated with the magnetic unit (160), more specifically wherein the system (10) is configured to track movement and/or location of the writing instrument (100) in at least five degrees of freedom based on the magnetic field measurements.
38. The system (10) according to embodiment 37, wherein the system (10) comprises a processing unit (400) configured to control a representation of the writing instrument (100) on an output device (500).
39. A method of assembling a writing instrument (100), comprising:
   a) providing a writing instrument body (110) comprising a body longitudinal axis (x) and a writing orifice (120) at a distal end (111) of the body (110),
   b) providing a reservoir (140) for storing a writing ink, a nib (150) and a magnetic unit (160),
   c) coupling the nib (150), the reservoir (140) and the magnetic unit (160) with each other and to the body (110) such that the nib (150) is arranged distally to the reservoir (140) and in fluid communication with the reservoir (140), the magnetic unit (160) is arranged between the reservoir (140) and a distal end portion (151) of the nib (150), the reservoir (140) is arranged proximally to the writing orifice (120), the nib (150) extends substantially along the body longitudinal axis (x), the distal end portion (151) protrudes through the writing orifice (120) and the magnetic unit (160) is arranged in the body (110).
40. The method according to embodiment 39, further comprising:
   providing a coupling component (130) configured to establish fluid communication between the nib (150) and the reservoir (140),
   disposing the magnetic unit (160) in a component receptacle (133) of the coupling component (130) and/or a nib receptacle (152) of the nib (150) such that the magnetic unit (160) is held between the coupling component (130) and the nib (150), and
   coupling a distal end portion (131) of the coupling component (130) to the nib (150) and a proximal end portion (132) of the coupling component (130) to the reservoir (140).
41. A computer-implemented method (600) for identifying a writing instrument (100), comprising:
   a) obtaining magnetic field measurements (610) associated with a magnetic unit (160) of a writing instrument (100) according to any one of embodiments 1 to 36 and measured with a plurality of magnetometers (300),
   b) detecting a magnetic signature (620) of the magnetic unit (160) based on the obtained magnetic field measurements, and
   c) identifying writing instrument information (630) based on the detected magnetic signature.
42. The computer-implemented method (600) according to embodiment 41, further comprising:
   controlling a virtual reproduction (640) of the writing instrument (100) and/or a writing operation of the writing instrument (100) on a writing surface by a user based on the identified writing instrument information.
43. The computer-implemented method (600) according to embodiment 42, wherein controlling the virtual reproduction (640) comprises:
   adapting and/or selecting at least one setting of the virtual reproduction based on the identified writing instrument information.
44. The computer-implemented method (600) according to any one of embodiments 41 to 43, wherein the magnetic signature includes one or more of a magnetic field strength, a magnetic field shape, and a magnetic field location.
45. The computer-implemented method (600) according to any one of embodiments 41 to 44, wherein writing instrument information includes one or more of a type, a color, a nib type and a nib shape of the writing instrument (100).
46. The computer-implemented method (600) according to any one of embodiments 41 to 45, wherein identifying writing instrument information based on the detected magnetic signature comprises:
   accessing a database comprising a predefined data list which correlates writing instrument information to the magnetic signature, and
   selecting writing instrument information of the predefined data list based on a match of writing instrument information and magnetic signature.
47. The computer-implemented method (600) according to any one of embodiments 41 to 46, further comprising:
   determining and/or tracking a location (650) of the writing instrument (100) based on the magnetic signature, more specifically relative to the writing surface.
48. The computer-implemented method (600) according to embodiment 47, when dependent on embodiment 42, further comprising:
   controlling the virtual reproduction based on the determined and/or tracked location of the writing instrument (100).
49. The computer-implemented method (600) according to embodiment 48, further comprising:
   representing the controlled virtual reproduction (660) on at least one output device (500), more specifically wherein the representation and/or movement of the virtual reproduction on the at least one output device (500) is based on the writing instrument information and/or based on the determined and/or tracked location of the writing instrument (100) relative to writing surface.
50. A computer system configured to execute the computer-implemented method according to any one of embodiments 41 to 49.
51. A computer program configured to execute the computer-implemented method according to any one of embodiments 41 to 49.
52. A computer-readable medium or signal storing the computer program of embodiment 51.
53. A kit of parts, comprising:
   a writing instrument (100) according to any one of embodiments 1 to 36, wherein the magnetic unit (160) is a first magnetic unit, and
   at least one second magnetic unit.
54. The kit of parts according to embodiment 53, wherein the first magnetic unit is configured to define a first magnetic signature and the at least one second magnetic unit is configured to define a second magnetic signature, the first magnetic signature being different from the second magnetic signature.
55. Use of a writing instrument (100) according to any one of embodiments 1 to 36 with a tracking system for determining and/or tracking a location of the writing instrument (100).

### REFERENCE NUMERALS

- X: first reference axis
- Y: second reference axis
- Z: vertical reference axis
- U: user
- x: body longitudinal axis
- m: magnetic unit longitudinal axis
- c: coupling component longitudinal axis
- 10: system
- 100: writing instrument
- 110: writing instrument body
- 110a: first body portion
- 110b: second body portion
- 111: distal end
- 112: proximal end
- 120: writing orifice
- 130: coupling component
- 131: distal end portion
- 132: proximal end portion
- 133: receptacle
- 140: reservoir
- 150: nib
- 151: distal end portion
- 152: nib receptacle
- 160: magnetic unit
- 161: magnetic objects
- 162: magnetic moment vector
- 200: writing support
- 210: writing support surface
- 300: plurality of magnetometers
- 400: processing unit
- 500: output device
- 510: display

## Claims

1. A writing instrument (100), comprising:
a writing instrument body (110) comprising a body longitudinal axis (x) and a writing orifice (120) at a distal end (111) of the body (110),
a reservoir (140) for storing a writing ink arranged proximally to the writing orifice (120),
a nib (150) arranged distally to the reservoir (140) and in fluid communication with the reservoir (140), wherein the nib (150) extends along the body longitudinal axis (x) and comprises a distal end portion (151) protruding through the writing orifice (120), and
a magnetic unit (160) arranged in the body (110) between the reservoir (140) and the distal end portion (151) of the nib (150).

2. The writing instrument (100) according to claim 1, wherein the magnetic unit (160) is configured to generate a magnetic field.

3. The writing instrument (100) according to claim 1 or claim 2, wherein the magnetic unit (160) comprises a magnetic unit longitudinal axis (m), and wherein the magnetic unit (160) is arranged in the body (110) such that the magnetic unit longitudinal axis (m) is coaxial with the body longitudinal axis (x).

4. The writing instrument (100) according to any one of the preceding claims, wherein the magnetic unit (160) defines a magnetic moment vector (162) and wherein the magnetic unit (160) is arranged in the body (110) such that the magnetic moment vector (162) is substantially coaxial with the body longitudinal axis (x).

5. The writing instrument (100) according to any one of the preceding claims, wherein the writing instrument (100) is electrically and/or electronically passive.

6. The writing instrument (100) according to any one of the preceding claims, comprising a coupling component (130) configured to establish fluid communication between the nib (150) and the reservoir (140), more specifically wherein a distal end portion (131) of the coupling component (130) is coupled to the nib (150) and a proximal end portion (132) of the coupling component (130) is coupled to the reservoir (140).

7. The writing instrument (100) according to claim 6, wherein the coupling component (130) comprises a coupling component longitudinal axis (c), wherein the coupling component (130) is arranged in the body (110) such that the coupling component longitudinal axis (c) is coaxial with the body longitudinal axis (x).

8. The writing instrument (100) according to claim 6 or claim 7, wherein the coupling component (130) and/or the nib (150) couples the magnetic unit (160) to the body (110), more specifically wherein the magnetic unit (160) is clamped between the nib (150) and the coupling component (130) such that relative movement of the magnetic unit (160) to the body (110) is prevented.

9. The writing instrument (100) according to any one of claims 6 to 8, wherein the coupling component (130) comprises a component receptable (133), wherein the magnetic unit (160) is at least partially arranged in the component receptable (133).

10. The writing instrument (100) according to claim 9, wherein the distal end portion (131) is configured to receive a portion of the nib (150) in the component receptacle (133), wherein the magnetic unit (160) is held in the component receptacle (133) between the coupling component (130) and the nib (150).

11. The writing instrument (100) according to claim 9 or claim 10, wherein the coupling component (130) comprises a first section (134a) with a first porosity and at least one second section (134b) with a second porosity different than the first porosity, wherein the first section (134a) extends at least partially along the receptacle (133) and is configured to promote the transport of ink from the reservoir (140) to the nib (150).

12. The writing instrument (100) according to any one of claims 6 to 11, wherein the nib (150) comprises a nib receptacle (152) facing proximally and wherein the magnetic unit (160) is at least partially arranged in the nib receptacle (152),
wherein the magnetic unit (160) is held between the coupling component (130) and the nib (150).

13. A system (10) for determining and/or tracking a location of a writing instrument (100), the system (10) comprising:
a writing instrument (100) according to any one of the preceding claims, and
a plurality of magnetometers (300) configured to create a sensing volume and configured to measure a magnetic field associated with the magnetic unit (160), wherein the system (10) is configured to track movement and/or location of the writing instrument (100) in at least five degrees of freedom based on the magnetic field measurements.

14. A method of assembling a writing instrument (100), comprising:
a) providing a writing instrument body (110) comprising a body longitudinal axis (x) and a writing orifice (120) at a distal end (111) of the body (110),
b) providing a reservoir (140) for storing a writing ink, a nib (150) and a magnetic unit (160),
c) coupling the nib (150), the reservoir (140) and the magnetic unit (160) with each other and to the body (110) such that the nib (150) is arranged distally to the reservoir (140) and in fluid communication with the reservoir (140), the magnetic unit (160) is arranged between the reservoir (140) and a distal end portion (151) of the nib (150), the reservoir (140) is arranged proximally to the writing orifice (120), the nib (150) extends substantially along the body longitudinal axis (x), the distal end portion (151) protrudes through the writing orifice (120) and the magnetic unit (160) is arranged in the body (110).

15. The method according to claim 14, further comprising:
providing a coupling component (130) configured to establish fluid communication between the nib (150) and the reservoir (140),
disposing the magnetic unit (160) in a component receptacle (133) of the coupling component (130) and/or a nib receptacle (152) of the nib (150) such that the magnetic unit (160) is held between the coupling component (130) and the nib (150), and
coupling a distal end portion (131) of the coupling component (130) to the nib (150) and a proximal end portion (132) of the coupling component (130) to the reservoir (140).
